# EUROPÄISCHE PATENTSCHRIFT

(11) **EP 0 596 305 B1**
(45) Veröffentlichungstag und Bekanntmachung des Hinweises auf die Patenterteilung: **03.07.1996**
(21) Anmeldenummer: 93116754.8
(22) Anmeldetag: 16.10.1993
(51) Int. Cl.: B60J 5/04

(54) **Verschlussvorrichtung**
Closing device
Système de fermeture

(30) Priorität: 06.11.1992 DE 4237473
(43) Veröffentlichungstag der Anmeldung: 11.05.1994
(73) Patentinhaber: Robert Orten GmbH & Co. Fahrzeugbau -vertrieb, 54470 Bernkastel-Kues (DE)
(72) Erfinder: Söller, Fritz, D-54472 Longkamp (DE)
(74) Vertreter: Selting, Günther, Dipl.-Ing.

(56) Entgegenhaltungen:
- EP-A- 0 346 651
- BE-A- 744 868
- DE-A- 4 034 270
- DE-U- 7 811 402
- GB-A- 2 152 448

## Beschreibung

Die Erfindung betrifft einen Lastwagenaufbau nach dem Oberbegriff des Patentanspruchs 1, der jenem nach der DE-A-4 034 270 gattungsgemäß ausgebildet ist.

Aus FR-A-2 615 471 ist eine Verschlußvorrichtung für die Laderaumtür eines Lastwagenaufbaus bekannt, bei der die Laderaumtür von einem Riegelelement gegen Öffnung verriegelt wird. Beidseitig der Laderaumtür ist dabei jeweils an Vor- und Rückwand ein erstes Riegelelement angeordnet, das einen in einer Führung verschiebbaren Schaft mit einem endseitigen Betätigungsgriff aufweist. Ein zweites Riegelelement, das dem Schaft zugewandt ist und eine Aufnahme für den Schaft vorsieht, ist jeweils an der Laderaumtür angeordnet. Im verriegelten Zustand greift der Schaft des ersten Riegelelements in das zweite Riegelelement ein und verhindert so die Öffnung der Laderaumtür. Die Verschlußvorrichtung muß zuerst von Hand oder mit einem Stellmotor gelöst werden, bevor die Laderaumtür geöffnet werden kann. Ferner ist es erforderlich, eine sehr spielfreie Konstruktion der Laderaumtür zu wählen, damit der Schaft in die dafür vorgesehene Aufnahmeöffnung eingeführt werden kann.

Aus DE-A-40 34 270 ist ein Lastwagenaufbau bekannt, bei dem die Laderaumtür durch ihr Eigengewicht gegen ein Widerlager gedrückt wird, und die eine Antriebsvorrichtung aufweist, die die Laderaumtür öffnet und schließt. Die Laderaumtür ist in mehrere horizontal übereinander angeordnete, durch Gelenk verbundene Seitenwandteile unterteilt, von denen das oberste im rechten Winkel an einem hochschwenkbaren Dachteil, das sich von der Vorderwand bis zur Rückwand des Lastwagenaufbaus erstreckt, anschließt. Das unterste Seitenwandteil weist einen unteren Längsrand auf, der in eine zugeordnete Nut des Lastwagenaufbaus eingreift. Weitere einarmige Hebel sind an der geteilten Seitenwand als Führungsteile angeordnet, die beim Schließen der Seitenwand in zugeordnete Führungselemente eingreifen bzw. diese hintergreifen. Bei der Verschlußvorrichtung dieses Lastwagenaufbaus müssen Längsrand und Nut formmäßig aufeinander abgestimmt sein. Sie erfordert ferner einen im wesentlichen linearen Bewegungsablauf des unteren Seitenwandteils bei der Schließbewegung. Weiterhin muß die Antriebsvorrichtung die zu schließende Tür genau in Position fahren. Wird diese Position nicht erreicht oder verfehlt, kann es zu Abwinklungen an den Gelenken zwischen den Seitenwandteilen kommen und der Längsrand greift nicht oder nicht spielfrei in die Nut ein. Daher besteht die Gefahr, daß die Laderaumtür nicht richtig verschlossen ist.

Aus BE-A-744 868 ist ein Lastwagenaufbau bekannt, bei dem eine Seitenwand durch ein oberes und ein unteres Seitenwandteil, die gelenkig miteinander verbunden sind, verschlossen wird. Das obere Seitenwandteil ist über ein Gelenk unter dem Dach aufgehängt, während das untere Seitenwandteil am unteren Ende eine Rolle aufweist, die in vertikalen Profilleisten geführt ist. An einer Profilleiste des oberen Seitenwandteils greift ein zweiarmiger Hebel an, der von einer Kolben-Zylinder-Einheit angetrieben wird, um das obere Seitenwandteil hochzuschwenken. Im hochgeschwenkten Zustand des oberen Seitenwandteils wird das untere Seitenwandteil mitgenommen, wobei es selbst im Öffnungszustand noch einen Teil der Seitenöffnung des Fahrzeugaufbaus versperrt. Daher kann die Seitenöffnung ohne manuelle Hilfe nicht vollständig geöffnet werden. Außerdem bleibt unter dem Dach ein Hohlraum, der seitlich nicht zugänglich ist.

In EP-A-0 346 651 ist ein Lastwagenaufbau beschrieben, bei dem die Seitenöffnung durch zwei Seitenwandteile verschlossen ist. Das obere Seitenwandteil ist mit Fangelementen versehen, die mit am unteren Seitenwandteil vorgesehenen Verriegelungselementen zusammenwirken, wenn aus dem oberen Seitenwandteil ein Verschlußelement nach unten gedrückt wird. Die beiden Seitenwandteile sind nicht durch ein horizontales Gelenk untereinander verbunden.

Es ist Aufgabe der Erfindung, einen Lastwagenaufbau der im Oberbegriff des Patentanspruchs 1 angegebenen Art mit vereinfachter und sicherer Verschlußvorrichtung zu schaffen.

Die Aufgabe wird erfindungsgemäß mit den Merkmalen des Patentanspruchs 1 gelöst.

Bei dem erfindungsgemäßen Lastwagenaufbau weist die Verschlußvorrichtung an der Laderaumtür und an den Widerlagern zusammengreifende Fangelemente auf, die in der Endphase des Schließens der Laderaumtür miteinander in Eingriff kommen und mit zunehmender Schließbewegung die Laderaumtür unter der Kraft der Antriebsvorrichtung in der Schließstellung zentrieren. Bei völlig verschlossener Laderaumtür befinden sich die Fangelement vollständig in gegenseitigem Eingriff und hindern eine Öffnung der Laderaumtür.

Die Fangelemente greifen ineinander, bevor die Laderaumtür endgültig verschlossen ist. Dadurch wird die Laderaumtür bei der Schließbewegung von den Fangelementen in Richtung auf ihre Schließstellung geführt und in ihrer Schließstellung sicher zentriert. Die Fangelemente halten in der Schließstellung die Laderaumtür fest und klapperfrei verschlossen.

Weiterbildungen der Erfindung sind in den abhängigen Ansprüchen 2 bis 5 angegeben.

Vorzugsweise handelt es sich bei der Laderaumtür um eine Hebe-Schwenk-Tür, die entlang mindestens einer ihrer beiden Längskanten und vorzugsweise entlang beider Längskanten geführt ist. Das Widerlager ist dann in Höhe des Bodens des Lastwagenaufbaus angeordnet bzw. am Boden des Lastwagenaufbaus befestigt. Dadurch wird sichergestellt, daß die gesamte Seitenwandöffnung des Lastwagenaufbaus abgeschlossen wird. Es ist jedoch auch möglich, daß das Widerlager an einem vom Boden des Lastwagenaufbaus hochschwenkbaren Seitenwandteil angeordnet ist, das mit der Hebe-Schwenk-Tür in Schließstellung gebracht wird.

Vorteilhafterweise handelt es sich bei den zusammengreifenden Fangelementen um mindestens einen Fangkeil, und um mindestens eine Fangtasche zur Aufnahme mindestens eines Fangkeils, von denen wahlweise je ein Teil an der Laderaumtür und das andere Teil an dem Widerlager angeordnet ist. Die Keilform des einen Fangelements läßt eine spielbehaftete Schließbewegung der Laderaumtür zu, ohne daß ein manueller Eingriff zum Zusammenführen der beiden Teile notwendig wäre. Die Keilform des Fangkeils ist dazu geeignet, bereits vor Abschluß der Laderaumtür in die Fangtasche einzugreifen und bei weiterem aufeinanderzu Bewegen von dieser in Richtung auf die Schließstellung zentriert zu werden. Die etwas überhöht angebrachte Fangtasche erfordert es, bei bereits eingefangenem Fangkeil diesen und die mit ihm verbundene Laderaumtür mittels Krafteinwirkung in Schließstellung zu zwingen. Die Kraft dazu wird von der Antriebsvorrichtung der Laderaumtür aufgebracht. Auch wenn die Antriebsvorrichtung abgeschaltet wird, bleibt die Laderaumtür drückend und sicher gehalten. Zum erneuten Öffnen der Laderaumtür ist es erforderlich, die Haltekraft der Fangelemente durch die Antriebsvorrichtung zu überwinden.

Vorteilhafterweise ist der Fangkeil hohl. Während der Schließbewegung, die den Fangkeil in Eingriff mit der zugehörigen Fangtasche bringt, können die Begrenzungen des Fangkeils aufgrund einer einwirkenden Schließkraft in Richtung aufeinander gepreßt werden.

Die Erfindung wird anhand eines Ausführungsbeispiels näher erläutert.

Es zeigen:
- Fig. 1: einen Lastwagenaufbau mit einer schließbaren Laderaumtür mit Fangelementen,
- Fig. 2: den Querschnitt eines Fangelements gemäß dem Detail II aus Fig. 1, und
- Fig. 3: eine Ansicht von Fig. 2 aus Richtung des Pfeils III.

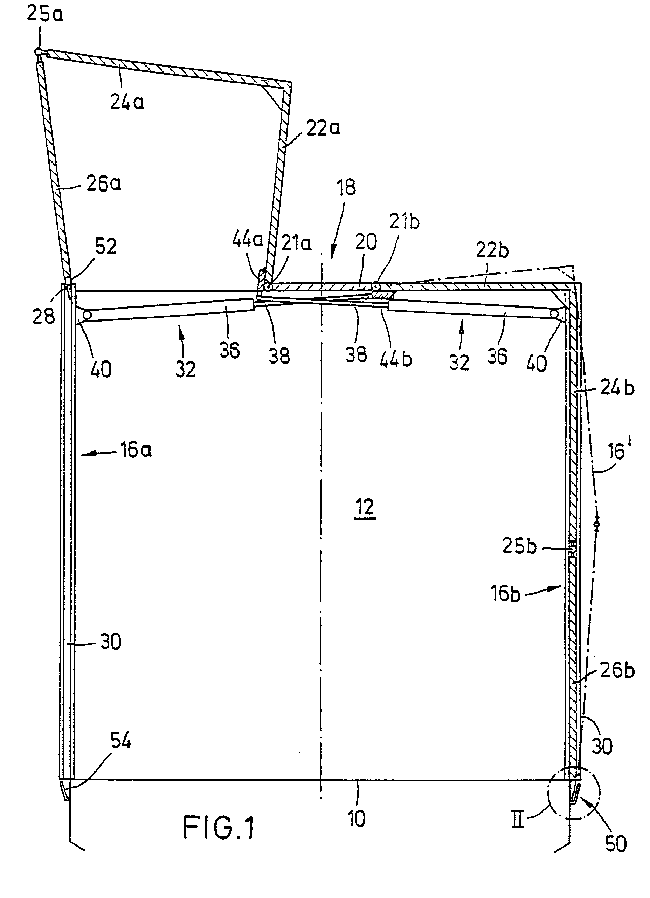

In Fig. 1 ist ein Lastwagenaufbau gezeigt, der im geschlossen Zustand (rechte Hälfte) eine längliche Kastenform aufweist, die sich von der Vorderwand 12 bis zur Rückwand erstreckt. Zwischen Vorderwand 12 und Rückwand verläuft der Pritzschenboden 10 des Lastwagenaufbaus, an den sich seitlich zwei Seitenwände 16a,16b anschließen. Eine Dachwand 18 des Lastwagenaufbaus weist ein feststehendes mittleres erstes Dachteil 20, das sich von der Vorderwand 12 zur Rückwand erstreckt, und zwei über ein Gelenk 21a bzw. 21b mit dem ersten Dachteil 20 seitlich verbundene zweite Dachteile 22a,22b auf. An das zweite Dachteil 22a bzw. 22b greift die in Längsrichtung zweigeteilte Seitenwand 16a bzw. 16b an, deren oberes Seitenwandteil 24a bzw. 24b rechtwinklig am zweiten Dachteil 22a bzw. 22b befestigt ist und welche mit dem unteren Seitenwandteil 26a bzw. 26b über ein horizontales Kniegelenk 25a bzw. 25b verbunden ist. An der Unterseite des unteren Seitenwandteils 26a bzw. 26b sind vorne und hinten Führungselemente 28 angeordnet, die längs vertikaler Führungsschienen 30 geführt sind, welche an den vier Eckpfosten des Aufbaus angebracht sind. Die Führungselemente 28 bewirken, daß das untere Seitenwandteil an seiner Unterkante über die gesamte Höhe vertikal geführt ist.

Als Antriebsvorrichtungen für die Betätigung der von dem zweiten Dachteil 22a bzw. 22b und dem oberen Seitenwandteil 24a bzw. 24b und dem unteren Seitenwandteil 26a bzw. 26b gebildeten Laderaumtür dienen Kolben-Zylinder-Einheiten 32. Die Kolben-Zylinder-Einheiten 32 sind zylinderseitig an Auflagen 40 abgestützt, die an den Eckpfosten angebracht sind. Kolbenstangenseitig greifen die Kolben-Zylinder-Einheiten 32 an Hebelarmen 44a bzw. 44b an, die an den zweiten Dachteilen 22a bzw. 22b im Bereich des Gelenks 21a bzw. 21b zum ersten Dachteil 20 angebracht sind. Das zweite Dachteil 22a bzw. 22b bildet mit dem Hebelarm 44a bzw. 44b einen zweiarmigen Hebel um das Gelenk 21a bzw. 21b. Die beiden Kolben-Zylinder-Einheiten 32 sind unmittelbar unterhalb des Dachs angeordnet und verlaufen generell horizontal. Im Bereich unterhalb des ersten Dachteils 20 überlappen sich die Kolbenstangen 38.

Wird die Kolben-Zylinder-Einheit 32 (in Fig. 1 links) von ihrer Ruhestellung, bei der die Seitenwand 16b (in Fig. 1 rechts) verschlossen ist, ausgefahren, bewegt sich die Kolbenstange 38 nur ein kurzes nach vorne, öffnet dabei aber die Seitenwand 16b. In der Öffnungsstellung, die die Seitenwand 16a freigibt (in Fig. 1 links), ist die Kolben-Zylinder-Einheit 32 in ihrer Lage nur geringfügig verändert (in Fig. 1 rechts).

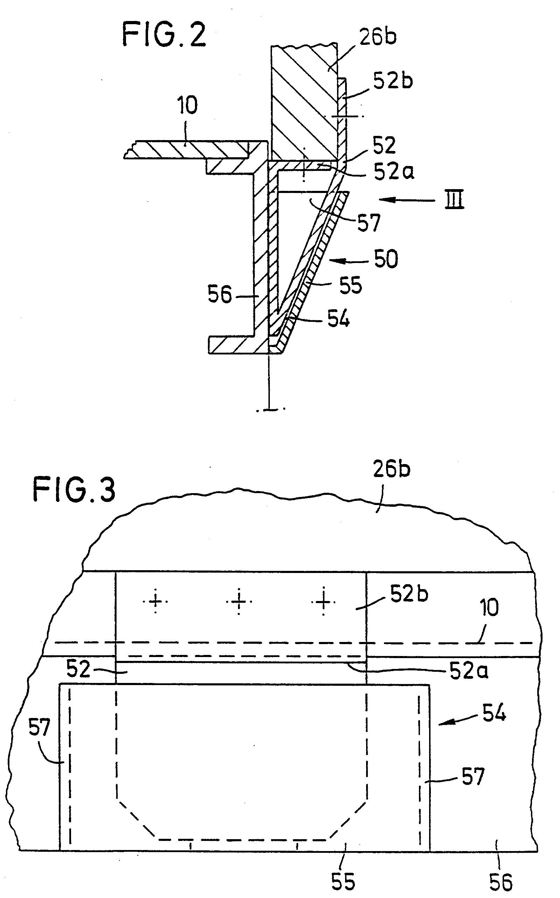

Um die Laderaumtür sicher zu verschließen, weist diese an ihrer Unterkante eine Reihe von Fangkeilen 52 auf, die mit Fangtaschen 54, die geringfügig unterhalb des Pritschenbodens 10 an der Außenseite des Lastwagenaufbaus angebracht sind, in der Art von Fangelementen zusammengreifen. Ein Fangelement 50, das aus je einer Fangtasche 54 und einem Fangkeil 52 besteht, ist in den Fign. 2 und 3 dargestellt.

An einem senkrecht von dem Pritschenboden 10 des Lastwagenaufbaus nach unten abstehenden Flansch 56 befindet sich unterhalb des Niveaus des Pritschenbodens 10 die Fangtasche 54. Die Fangtasche 54 bildet einen sich nach unten keilförmig verjüngenden, an seiner Oberseite offenen Hohlraum, der nach außen durch eine Schrägwand 55 und nach innen durch den Flansch 56 begrenzt ist. Am vorderen und am rückwärtigen Ende ist die Fangtasche 54 durch dreieckförmige Stirnwände 57 begrenzt.

In die Fangtasche 54 greift der Fangkeil 52 ein, der mit dem unteren Seitenwandteil 26b fest verbunden ist. Der Fangkeil 52 besteht aus einem Materialband, vorzugsweise aus Stahl, das zu einem der Innenkontur der Fangtasche 54 angepaßten Keil gebogen ist. Das eine Ende 52a des Materialbandes bildet die Oberseite des sich nach unten verjüngenden hohlen Fangkeils. Dieses Ende ist an der Unterseite des Seitenwandteils 26b befestigt. Das andere Ende 52b des Materialbandes bildet einen über das Ende 52a aufragenden Steg, der an der Außenseite des unteren Seitenwandteils 26b befestigt ist.

Während der Schließbewegung der Laderaumtür wird das untere Ende des unteren Seitenwandteils 26b entlang der senkrechten Führungen 30 nach unten bewegt. Dabei schwenkt das zweite Dachteil 22b um die Achse 21b, und veranlaßt die Seitenwand 16b zu einer seitlich des Lastwagenaufbaus verlaufenden Entfaltungsbewegung, bei dem das Kniegelenk 25b mit fortschreitender Betätigung gestreckt und entlang einer definierten Kurve nach unten bewegt wird. Die Fangkeile 52 werden mit zunehmender Schließbewegung in Richtung der Fangtaschen 54 nach unten ausgerichtet.

Bei nahezu geschlossener Laderaumtür 26b - in Fig. 1 strichpunktiert gezeichnet und als 16' bezeichnet - sind die Fangkeile 52 von den Fangtaschen 54 aufgenommen und können nicht mehr herausrutschen. Die Fangtaschen 54 bilden somit eine justierende Führung in Vertikalrichtung für die Fangkeile 52, die an der Unterseite des unteren Seitenwandteils 26b angeordnet sind.

Die Fangelemente stellen also einerseit sicher, daß die Laderaumtür, die hier eine Hebe-Schwenktür ist, über die gesamte Länge gleichmäßig die Schließbewegung mit ausführt, die das untere Seitenwandteil 26b aufgrund der Führungselemente 28 vorne und hinten vorgibt. Aufgrund der das gegenseitige Greifen begünstigenden Keilform ist anfangs ein etwaiges Spiel der Tür ohne negative Folge für die Schließsicherheit. In dem beinahe geschlossenen Zustand der Laderaumtür, in dem Fangkeil 52 und die Fangtasche 54 formschlüssig zusammengreifen, ist die Lage der Tür exakt und spielfrei bestimmt. Von dieser Position aus wird die Kolben-Zylinder-Einheit 32 entgegen der Öffnungsrichtung betätigt, d.h. ein Zug auf den Hebelarm 44a wird ausgeübt. Diese Betätigung in Schließrichtung wird über das zweite Dachteil 22a und das obere Seitenwandteil 24a auf das untere Seitenwandteil 26a übertragen und die Fangkeile 52 in die Fangtaschen 54 gepreßt. Dabei kommt es zugleich zu einer leichten Ausdehnung der Fangtasche 54 und zu einem Zusammendrücken des Materialbandes des Fangkeils 52. Nachdem die Fangkeile 52 derart in den Fangtaschen 54 zentriert wurden, wird die Kolben-Zylinder-Einheit 32 hydraulich verriegelt, so daß diese nach wie vor die Laderaumtür in Schließstellung drückt. Bei der hydraulischen Verriegelung sperrt ein Ventil den im Zylinder herrschenden Druck ab, so daß dieser während der Fahrt des Fahrzeugs aufrechterhalten bleibt. Gleichzeitig sind die Fangkeile 52 von den Fangtaschen 54 fest in Position geklemmt. Fangtasche 54 und Fangkeil 52 bilden eine Preßpassung. Ein Herausspringen aus den Fangtaschen 54 ist ohne erneute Betätigung der Kolben-Zylinder-Einheit 32 nicht möglich. Der Verschluß, der von Fangkeil 52 und Fangtasche 54 gebildet wird, besteht dauerhaft und hält einer ungewünschten Öffnung von außen stand. Auch bei abgestelltem Anhänger ist es nicht ohne weiteres möglich, diesen von außen aufzubrechen. Soll die Laderaumtür erneut geöffnet werden, wird die Kolben-Zylinder-Einheit 32 in Öffnungsrichtung betätigt, und zu Beginn der Öffnungsbewegung erst die Fangkeile 52 aus den Fangtaschen 54 herausgezogen.

Es ist möglich, die Form von Fangkeil 52 und Fangtasche 54 auch anders zu wählen, sofern diese zusammengreifend als Fangelemente betätigbar sind. Es ist auch möglich, die Fangtasche 54 im Bereich des unteren Endes des unteren Seitenwandteils 26a anzuordnen, und den Fangkeil 52 an dem Flansch 56. In diesem Fall würde die Fangtasche 54 bei einer Öffnungsstellung, wie die Laderaumtür 16' in Fig. 1, über den Fangkeil 52 gestülpt werden, und dabei die Laderaumtür in Richtung auf ihre Schließstellung führen und zentrieren. Bei Betätigung der Antriebsvorrichtung wird die Fangtasche auf den Fangkeil aufgesetzt und die Laderaumtür geschlossen. Bei einer derartigen Kombination könnten jedoch die Fangkeile über das Niveau des Pritschenbodens 10 hochstehen und die Beladung des Lastwagenaufbaus behindern.

Es ist ferner möglich, die Fangelemente auch bei einer Laderaumtür zu verwenden, die von einem anderen Aggregat als einer Kolben-Zylinder-Einheit in Schließstellung gedrückt wird, z.B. von einer entlang der Führungsschienen verlaufenden, an die Führungselemente 28 angreifenden Kette. Es ist schließlich möglich, zusätzlich zu der pressenden Zentrierung des Fangkeils 52 in der Fangtasche 54 eine Bohrung durch beide Elemente quer zur Schließrichtung vorzusehen, durch die ein Riegelstift einen zusätzlichen Schluß der Laderaumtür bewirkt.

## Patentansprüche

1. Lastwagenaufbau mit
einer Vorderwand (12), einer Rückwand und einem Boden,
zwei Seitenwänden (16a,16b), von denen mindestens eine als Laderaumtür ausgebildet ist und aus einem oberen Seitenwandteil (24a,24b) und einem gelenkig mit dem oberen Seitenwandteil (24a,24b) verbundenen unteren Seitenwandteil (26a,26b) besteht,
einer Dachwand (18), die ein mit der Vorderwand (12) und der Rückwand starr verbundenes erstes Dachteil (20) und ein gelenkig mit dem ersten Dachteil (20) verbundenes hochschwenkbares zweites Dachteil (22a,22b) aufweist, wobei das obere Seitenwandteil (24a,24b) rechtwinklig von dem zweiten Dachteil (22a,22b) absteht,
einer Verschlußvorrichtung für die Laderaumtür mit einer die Laderaumtür in der Schließstellung gegen ein Widerlager drückenden Antriebsvorrichtung (32), die das zweite Dachteil (22a,22b) von einer horizontalen Schließstellung in eine im wesentlichen vertikale Öffnungsstellung bewegt,
wobei die Verschlußvorrichtung zusammengreifende erste (54) und zweite (52) Fangelemente aufweist, die in der Endphase des Schließens der Laderaumtür miteinander in Eingriff kommen und mit zunehmender Schließbewegung die Laderaumtür unter der Kraft der Antriebsvorrichtung in der Schließstellung zentrieren,
wobei die Längen des oberen Seitenwandteils (24a,24b) und des unteren Seitenwandteils (26a,26b) so bemessen sind, daß das untere Ende des unteren Seitenwandteils (26a,26b) sich in der Öffnungsstellung des zweiten Dachteils (22a,22b) etwa in Höhe des ersten Dachteils (20) befindet,
**dadurch gekennzeichnet,** daß
das obere (24a,24b) und das untere (26a,26b) Seitenwandteil die gesamte Höhe der Seitenwandöffnung abdecken,
das untere Ende des unteren Seitenwandteils (26a,26b) entlang vertikaler Führungsschienen geführt ist,
und die ersten Fangelemente (54) unterhalb des Bodens (10) an dem Widerlager angeordnet sind und die zweiten Fangelemente (52) mit dem unteren Ende des sich an das zweite Dachteil (22a,22b) unmittelbar anschließenden unteren Seitenwandteils (26a,26b) starr verbunden sind.

2. Lastwagenaufbau nach Anspruch 1, dadurch gekennzeichnet, daß die Antriebseinrichtung beim Schließen die zweiten Fangelemente (52) in die ersten Fangelemente (54) preßt.

3. Lastwagenaufbau nach Anspruch 1 oder 2, dadurch gekennzeichnet, daß die Führung der Seitenwand (16a,16b) an dem unteren Ende des unteren Seitenwandteils (26a,26b) entlang beider Längskanten (30) des Lastwagenaufbaus vorgesehen ist.

4. Lastwagenaufbau nach einem der Ansprüche 1 bis 3, dadurch gekennzeichnet, daß die Antriebsvorrichtung (32) mindestens eine hydraulisch verriegelbare Kolben-Zylinder-Einheit (32) mit einem den Druck im Hydraulikzylinder absperrenden Ventil aufweist.

5. Lastwagenaufbau nach einem der Ansprüche 1 bis 4, dadurch gekennzeichnet, daß die Fangelemente mindestens einen Fangkeil (52) und mindestens eine Fangtasche (54) zur Aufnahme mindestens eines Fangkeils (52) aufweisen.

## Claims

1. Loading room structure for trucks, comprising
a front wall (12), a rear wall and a bottom,
two side walls (16a,16b), at least one of said side walls being provided as a cargo room door and consisting of an upper side wall portion (24a,24b) and a lower side wall portion (26a, 26b) articulated to the upper side wall portion (24a,24b),
a roof wall (18) comprising a first roof portion (20) immovably connected to the front wall (12) and the rear wall, and a second roof portion (22a,22b) articulated to the first roof portion (20) and pivotable in an upward direction, the upper side wall portion (24a,24b) projecting at a right angle from the second roof portion (22a,22b),
a closure means for the cargo room door, comprising a drive means (32) arranged to press the cargo room door against an abutment in the closed position, and to move the second roof portion (22a,22b) from a horizontal closed position into a substantially vertical open position,
said closure means comprising mutually engaging first (54) and second (52) catch elements which in the final phase of the closing of the cargo room door are moved into mutual engagement, and upon continuing closing movement will center the cargo room door in the closed position through the force of said drive means,
the length dimensions the upper side wall portion (24a,24b) and the lower side wall portion (26a,26b) being selected to provide that the lower end of the lower side wall portion (26a, 26b) in the open position of the second roof portion (22a,22b) is arranged substantially at the height of the first roof portion (20),
**characterized in that**
the upper (24a,24b) and the lower (26a,26b) side wall portions cover the complete height of the side wall opening,
the lower end of the lower side wall portion (26a,26b) is guided along vertical guide rails,
and the first catch elements (54) are arranged below the bottom (10) on said abutment and the second catch elements (52) are immovably connected to the lower end of the lower side wall portion (26a,26b) immediately joining the second roof portion (22a,22b).

2. The loading room structure for trucks according to claim 1, characterized in that the drive means during closure presses the second catch elements (52) into the first catch elements (54).

3. The loading room structure for trucks according to claim 1 or 2, characterized in that said guide means of the side wall (16a,16b) at the lower end of the lower side wall portion (26a, 26b) is provided along both longitudinal edges (30) of the truck loading room structure.

4. The loading room structure for trucks according to any one of claims 1 to 3, characterized in that the drive means (32) comprises at least one hydraulically lockable piston-cylinder unit (32) having a valve provided to maintain the pressure in the hydraulic cylinder.

5. The loading room structure for trucks according to any one of claims 1 to 4, characterized in that the catch elements comprise at least one catcher wedge (52) and at least one catcher pocket (54) to receive at least one catcher wedge (52).

## Revendications

1. Carrosserie de camion, avec:
une paroi avant (12), une paroi arrière et un fond,
deux parois latérales (16a, 16b), dont au moins l'une se présente sous forme de porte d'espace de chargement et se compose d'un élément de paroi latérale supérieur (24a, 24b) et d'un élément de paroi latérale inférieur (26a, 26b) relié de manière articulée à l'élément de paroi latérale supérieur (24a, 24b),
une paroi de toit (18) qui présente un premier élément de toit (20), relié de manière rigide à la paroi avant (12) et à la paroi arrière, et un second éle'ment de toit (22a, 22b) susceptible de pivoter vers le haut, relié de manière articulée au premier élément de toit (20), l'élément de paroi latérale supérieur (24a, 24b) formant un angle droit avec le second élément de toit (22a, 22b).
un système de fermeture pour la porte d'espace de chargement, avec un dispositif d'entraînement (32), qui pousse la porte d'espace de chargement, en position de fermeture, contre une butée, et qui déplace le second élément de toit (22a, 22b) d'une position de fermeture horizontale à une position d'ouverture sensiblement verticale.
le système de fermeture présentant des premiers (54) et des seconds (52) éléments d'arrêt qui viennent en prise les uns avec les autres dans la phase finale de la fermeture de la porte d'espace de chargement et, au fur et à mesure que progresse le mouvement de fermeture, centrent la porte d'espace de chargement, sous la force du dispositif d'entraînement, en position de fermeture,
les longueurs de l'élément de paroi latérale supérieur (24a, 24b) et de l'élément de paroi latérale inférieur (26a, 26b) étant dimensionnées de façon que l'extrémité inférieure de l'élément de paroi latérale inférieur (26a, 26b) se situe, en position d'ouverture du second élément de toit (22a, 22b), environ à hauteur du premier élément de toit (20), caractérisée par le fait que
les éléments de paroi latérale supérieur (24a, 24b) et inférieur (26a, 26b) couvrent la hauteur totale de l'ouverture de paroi latérale,
l'extrémité inférieure de l'élément de paroi latérale inférieur (26a, 26b) est guidée le long de rails de guidage verticaux, et
les premiers éléments d'arrêt (54) sont disposés contre le piédroit, au-dessous du fond (10), et les seconds éléments d'arrêt (52) sont reliés de manière rigide à l'extrémité inférieure de l'élément de paroi latérale inférieur (26a, 26b) se rattachant directement au second élément de toit (22a, 22b).

2. Carrosserie de camion selon la revendication 1, caractérisée par le fait que le dispositif d'entraînement pousse, lors de la fermeture, les seconds éléments d'arrêt (52) dans les premiers éléments d'arrêt (54).

3. Carrosserie de camion selon la revendication 1 ou 2, caractérisée par le fait que le guidage de la paroi latérale (16a, 16b) est prévu, à l'extrémité inférieure de l'élément de paroi latérale inférieur (26a, 26b), le long des deux bords longitudinaux (30) de la carrosserie de camion.

4. Carrosserie de camion selon l'une des revendications 1 à 3, caractérisée par le fait que le dispositif d'entraînement (32) présente au moins un ensemble piston-cylindre (32) verrouillable hydrauliquement avec une soupape bloquant la pression dans le cylindre hydraulique.

5. Carrosserie de camion selon l'une des revendications 1 à 4, caractérisée par le fait que les éléments d'arrêt présentent au moins une cale d'arrêt (52) et au moins une poche d'arrêt (54) destinée à recevoir au moins une cale d'arrêt (52).
